# EUROPÄISCHE PATENTANMELDUNG

(11) **EP 2 367 349 A2**
(43) Veröffentlichungstag der Anmeldung: **21.09.2011**
(21) Anmeldenummer: 11158816.6
(22) Anmeldetag: 18.03.2011
(51) Int. Cl.: H04N 1/60

(54) **Verfahren zur Qualitätserfassung bei einer Wiedergabe von Farben**

(30) Priorität: 19.03.2010 DE 102010011985
(71) Anmelder: Spengler, Stefan, 82069 Hohenschäftlarn (DE)
(72) Erfinder: Spengler, Stefan, 82069 Hohenschäftlarn (DE)
(74) Vertreter: von Kreisler Selting Werner

(57) **Zusammenfassung**

Ein verbessertes Verfahren zur Qualitätserfassung bei einer Wiedergabe von Farben enthält die Schritte:
- Messen der Spektren der wiedergegebenen Farben an definierten Positionen,
- Vergleichen der gemessenen Spektren mit vordefinierten Referenzwerten,
- Ermitteln von Farbmesswerten, die oberhalb eines vorbestimmten Schwellenwerts liegen,
dadurch gekennzeichnet, dass zu jeder Messung Umgebungsparameter erfasst und gespeichert werden, wobei ermittelt wird, ob ein Umgebungsparameter einer Messung, bei der der Farbmesswert oberhalb eines Schwellenwerts liegt, bei einer anderen Messung, bei der der Farbmesswert unterhalb des Schwellenwerts liegt, verschieden ist.

## Beschreibung

Die Erfindung betrifft ein Verfahren zur Qualitätserfassung bei einer Wiedergabe von Farben.

Die Qualität der Wiedergabe von Farben ist mit bloßem Auge objektiv nur schwer zu erfassen. Insbesondere bei der Farbwiedergabe auf einem Bildschirm oder auf Druckerzeugnissen oder bei der Normlichtauswertung wird die Farbwiedergabe von verschiedenen Faktoren beeinflusst.

Aus DE 103 41 994 B9 ist ein Druckergebnis-Kontrollverfahren bekannt, bei dem eine Produktionsstrecke mit denjenigen Stationen im Druckverfahren, deren Bereitstellungsvorgänge und/oder Bearbeitungsvorgänge das Druckergebnis beeinflussen, definiert wird, wobei zumindest eine Druckvorstufen-Station, eine Reproduktions-Station und eine Druckmaschinen-Station vorgesehen werden. Für jede Station in der Produktionsstrecke wird ein Masterdatensatz vorgegeben, wobei die Masterdatensätze auf einer geräteunabhängigen einheitlichen Farbmetrikdefinition beruhen. Aktuelle Daten einer Station werden mit dem zugeordneten Masterdatensatz durch eine zentrale Einrichtung, welche mit den Stationen verbunden ist, verglichen, wobei jede Station getrennt kontrolliert wird. Eine Fernkalibrierung von einem oder mehreren Geräten einer entsprechenden Station wird durch die zentrale Einrichtung veranlasst, wenn bei dem Vergleich nicht mehr tolerierbare Abweichungen zwischen aktuellen Daten und dem für die Station vorgegebenen Masterdatensatz festgestellt werden. Bei dem beschriebenen Verfahren wird lediglich die Farbmetrik betrachtet und verglichen.

Der Erfindung liegt die Aufgabe zugrunde, ein verbessertes Verfahren zur Qualitätserfassung bei einer Wiedergabe von Farben zu schaffen.

Das erfindungsgemäße Verfahren ist definiert durch die Merkmale von Anspruch 1.

Erfindungsgemäß werden zunächst Spektren der wiedergegebenen Farben an definierten Positionen gemessen. Hierbei werden zum Beispiel Farbintensitäten oder Reflexionswerte für vorgegebene Wellenlängen aufgenommen, zum Beispiel für alle 10 nm im Bereich des sichtbaren Lichts zwischen 300 und 700 nm. Die auf diese Weise aufgenommenen Farbmesswerte werden auch als harte Parameter der erfindungsgemäßen Qualitätserfassung bezeichnet. Weitere harte Parameter sind zum Beispiel die Buntheitsdifferenz oder die Bunttonwinkeldifferenz. Die Farbmesswerte der gemessenen Spektren werden mit vordefinierten Referenzwerten verglichen. Die Referenzwerte können hierbei individuell vorgegeben werden, um unterschiedlichen Qualitätsansprüchen gerecht zu werden. Anhand des Vergleichs werden Farbmesswerte ermittelt, die oberhalb eines vorbestimmten Schwellenwerts liegen, d.h. Farbmesswerte, die außerhalb eines tolerierbaren Bereichs liegen.

Um die Messung zuverlässiger und aussagekräftiger zu gestalten, werden neben den harten Parametern auch sogenannte weiche Parameter in Form von Umgebungsparametern zu jeder Messung erfasst und gespeichert. Vorzugsweise wird also zu jedem aufgenommenen Farbmesswert ein zugehöriger Umgebungsparameter erfasst und zusammen mit dem Farbmesswert in einem Messdatensatz gespeichert. Unter Umgebungsparametern der Messung werden äußere Randbedingungen am Messort verstanden, die die Wiedergabe der Farben potentiell beeinflussen können. Im Falle der Farbwiedergabe durch einen Bildschirm sind als Umgebungsparameter zum Beispiel die Monitortemperatur, Gerätespannungen oder -ströme oder die Umgebungsbeleuchtung denkbar. Im Falle eines Druckerzeugnisses, zum Beispiel eines Offset-Drucks, kommen als Umgebungsparameter die Druckgeschwindigkeit, der ph-Wert, der elektrische Leitwert, der Alkoholgehalt, die Farbviskosität, die Farbwerkstemperatur, der Emulsionszustand der Emulsion Farbe-Wasser, die Luftfeuchtigkeit oder die Papierfeuchtigkeit in Frage. Im Falle einer Normlichtauswertung, also der Auswertung wiedergegebener Farben unter normierten Lichtverhältnissen, sind als Umgebungsparameter die Umgebungsbeleuchtung oder die Gerätetemperatur sowie Betriebsstunden denkbar.

Die Umgebungsparameter stellen also im Gegensatz zu den Farbmesswerten als harte Parameter die weichen Parameter der Messung dar. Durch Erfassen und Zuordnen der weichen Parameter zu den harten Parametern ist es möglich zu ermitteln, ob ein Umgebungsparameter einer Messung, bei der der Farbmesswert oberhalb eines Schwellenwerts liegt, bei einer anderen Messung, bei der der Farbmesswert unterhalb des Schwellenwerts liegt, verschieden ist. Das heißt mit anderen Worten, dass solche Messungen, bei denen ein harter Parameter außerhalb des tolerierbaren Bereichs liegt, mit Messungen verglichen werden, bei denen der betreffende Farbmesswert innerhalb des tolerierbaren Bereichs liegt, wobei eine Abweichung eines Umgebungsparameters auf eine mögliche Ursache für die Abweichung des Farbmesswerts hindeutet. Wird also bei einer ersten Messung festgestellt, dass ein Farbmesswert außerhalb des Toleranzbereichs liegt und diese Messung mit einer weiteren Messung am selben Ort zu einer anderen Zeit verglichen, bei der der Farbmesswert innerhalb des Toleranzbereichs liegt, und hierbei festgestellt, dass die Druckgeschwindigkeit bei diesen beiden Messungen abweicht, deutet die Abweichung in der Druckgeschwindigkeit auf eine mögliche Ursache für die Abweichung des Farbmesswertes hin.

Der ermittelte Umgebungsparameter kann dabei als Regelgröße verwendet werden, um die Farbwiedergabe zu verbessern. Beispielsweise kann also die Druckgeschwindigkeit an denjenigen Wert angeglichen werden, bei dem der zugehörige Farbmesswert innerhalb des Toleranzbereichs liegt, um die Druckqualität zu verbessern. Insbesondere ist denkbar, die Farbwiedergabe automatisiert zu regeln, indem eine ermittelte Abweichung eines Umgebungsparameters automatisch durch entsprechendes Anpassen, zum Beispiel der Druckgeschwindigkeit, der Raumtemperatur, der Bildschirmtemperatur usw., verringert wird.

Erfindungsgemäß ist es vorteilhaft, die aufgenommenen Farbmesswerte zusammen mit den zugehörigen Umgebungsparametern für jede Messung in einer Messdatei zu archivieren und in einer mit dem Internet verbundenen Datenbank zu speichern. Dies ermöglicht eine Überprüfung der Qualität der Farbwiedergabe an einem von dem Ort der Farbwiedergabe verschiedenen Ort. Im Falle eines Druckauftrags eines Kunden an eine Druckerei kann beispielsweise der Kunde von einem entfernten Ort die Qualität seines Druckauftrags prüfen und überwachen. Auf diese Weise wird eine ortsunabhängige Qualitätserfassung und Qualitätsprüfung ermöglicht. Im Falle der beschriebenen Regelung des Umgebungsparameters wird in entsprechender Weise eine ortsunabhängige Qualitätsverbesserung ermöglicht.

Bei einem Ausführungsbeispiel des erfindungsgemäßen Verfahrens wird bereits während der Messung oder während der Datenspeicherung bzw. der Übertragung der Messdaten auf eine mit dem Internet verbundene Datenbank eine gewichtete Qualitätsprüfung im Sinne einer Frühwarnfunktion durchgeführt. Hierbei werden die Farbmesswerte gemäß einer zuvor festgelegten Gewichtung für bestimmte Farbbereiche ausgewertet. So kann beispielsweise festgelegt werden, dass bei der Frühwarnfunktion ein Schwerpunkt auf Grautöne zu legen ist, während Primärfarben vernachlässigbar sind. In den ausgewählten Farbbereichen können eigene, zum Beispiel besonders enge, Toleranzen festgelegt sein, so dass bereits während der Datenerfassung oder während der Datenübertragung auf eine Internet-Datenbank eine erste Aussage über die Qualität der Farbwiedergabe ermöglicht wird.

Bei einer bevorzugten Ausführungsform, die typischerweise bei der Farbwiedergabe von Druckerzeugnissen Anwendung findet, ist ein Umgebungsparameter der Feuchtigkeitsgrad der Farbe im gedruckten Zustand. Hierbei wird der Farbmesswert einer Messung mit hohem Feuchtigkeitsgrad, d. h. im frisch gedruckten Zustand innerhalb weniger Minuten nach dem Druck, mit dem entsprechenden Farbmesswert bei geringem Feuchtigkeitsgrad, d. h. im getrockneten Zustand, verglichen. Der getrocknete Zustand wird typischerweise in einigen Stunden bis zu einigen Tagen erreicht. Auf diese Weise ist es möglich, die Qualitätsprüfung für ein Druckerzeugnis bereits im frisch gedruckten Zustand durchzuführen und auf die entsprechenden Farbmesswerte im trockenen Zustand zu schließen. Insbesondere ist es von Vorteil, als Farbmesswerte die Tonwertzunahme zu messen, und bereits im nassen Zustand der frisch gedruckten Farbe eine Optimierung der Tonwertzunahmekurven vorzunehmen. Die Farbmesswerte bei geringem Feuchtigkeitsgrad, d. h. also im getrockneten Zustand, können in einer Datenbank gespeichert sein, um bei der Messung der jeweiligen Farbmesswerte im feuchten Zustand auf einfache Weise zum Vergleich herangezogen werden zu können.

Im Folgenden wird ein Ausführungsbeispiel der Erfindung näher erläutert:
Das Ausführungsbeispiel betrifft die Farbwiedergabe von Druckerzeugnissen, die von einer Druckerei für einen Kunden als Auftraggeber angefertigt werden. In einem ersten Schritt werden auftragsspezifische Informationen, wie zum Beispiel Kundenname, Kundenobjekt, Druckform, Druckgruppe und Druckdatum erfasst. In einem zweiten Schritt werden Umgebungsparameter als weiche Parameter der Messung definiert. Als weiche Parameter werden die Druckmaschine, der Messtakt, die Papierklasse, das Messgerät und/oder die Messunterlage erfasst. Weitere zu erfassende Umgebungsparameter sind das Druckbogenformat, die Messkeilausrichtung, der Messkeiltyp, der Bedruckstoff, die Grammatur, die Druckfarbe, der Leitwert, der ph-Wert, die Luftfeuchtigkeit, die Druckgeschwindigkeit und der Auflagenstand.

Anschließend werden die Messbereiche für die Messung auf jedem Druckbogen fest gewählt. Zum Beispiel werden sechs Messkeile, d.h. Messbereiche, pro gemessenem Druckbogen mit jeweils 51 Messfeldern festgelegt. Die Farbmesswerte werden in jedem Messfeld jedes Messkeils erfasst und für jede Messung wird ein Durchschnitts-Farbmesswert ermittelt, der in einer Datentabelle als harter Messparameter den zuvor erfassten Umgebungsparametern als weiche Messparameter der betreffenden Messung zugeordnet wird.

Auf diese Weise entsteht für jede Messung ein Datensatz, der jeweils in einer mit dem Internet verbundenen Datenbank übertragen wird. Während der Übertragung wird bereits eine für bestimmte Farbbereiche gewichtete Qualitätsmessung als Frühwarnfunktion durchgeführt. Hierbei ist zuvor festzulegen, welche Farbbereiche stärker zu gewichten sind, als andere. So kann jeder Kunde seinen Qualitätsansprüchen entsprechend festlegen, ob ein Schwerpunkt bei der Vorab-Auswertung auf Grautöne, auf Primärfarben, auf Sekundärfarben oder auf Tertiärfarben zu legen ist. Alternativ kann diese Gewichtung zentral im System für das Gesamtsystem voreingestellt werden. Zudem werden für die ausgewählten Farbbereiche bei der Frühwarnfunktion individuelle Toleranzgrenzen festgelegt.

Im Laufe der Messungen, die bereits während des Druckvorgangs zu der Datenbank übertragen werden, kann der Kunde von einem entfernten Ort über das Internet auf die Messdateien zugreifen und diese auswerten. Bei der Auswertung wird für jede Messung geprüft, ob die gemessenen Spektren, also die jeweiligen Farbmesswerte innerhalb der von dem Kunden festgelegten Toleranzgrenzen liegen. Diejenigen Farbmesswerte einer Messung, die außerhalb der Toleranzgrenzen liegen, werden zusammen mit den betreffenden Umgebungsparametern ausgegeben.

Anschließend werden andere Messungen herangezogen, um zu ermitteln, ob bei einer Messung, bei der der abweichende Farbmesswert innerhalb des Toleranzbereichs liegt, eine Abweichung in einem der Umgebungsparameter besteht. Wird also beispielsweise eine Abweichung der Primärfarbe Magenta von dem zulässigen Toleranzbereich festgestellt, so wird anschließend in anderen Messungen, bei denen die Primärfarbe Magenta innerhalb des zulässigen Toleranzbereichs liegt, festgestellt, ob einer oder mehrere der Umgebungsparameter abweichen. Der abweichende Umgebungsparameter wird dem abweichenden Farbmesswert zugeordnet und zusammen mit diesem ausgegeben.

In einer Weiterbildung des Verfahrens wird in einem anschließenden Schritt der abweichende Umgebungsparameter als Regelgröße verwendet, um automatisiert oder manuell die Druckqualität zu verbessern. Wird also eine Abweichung in der Raumtemperatur festgestellt, kann das erfindungsgemäße Verfahren z.B. automatisch auf die Raumheizung bzw. -klimatisierung zugreifen und diese entsprechend angleichen, um die Raumtemperatur zu erzielen, bei der der Farbmesswert innerhalb des Toleranzbereichs liegt. Alternativ kann bei einer manuellen Regelung eine direkte Steuerung der Druckmaschinenregelung, der Monitorregelung usw. durch den Anwender selbst erfolgen.

## Patentansprüche

1. Verfahren zur Qualitätserfassung bei einer Wiedergabe von Farben, mit den Schritten:
- Messen der Spektren der wiedergegebenen Farben an definierten Positionen,
- Vergleichen der gemessenen Spektren mit vordefinierten Referenzwerten,
- Ermitteln von Farbmesswerten, die oberhalb eines vorbestimmten Schwellenwerts liegen,
**dadurch gekennzeichnet, dass**
zu jeder Messung Umgebungsparameter erfasst und gespeichert werden, und dass ermittelt wird, ob ein Umgebungsparameter einer Messung, bei der der Farbmesswert oberhalb eines Schwellenwerts liegt, bei einer anderen Messung, bei der der Farbmesswert unterhalb des Schwellenwerts liegt, verschieden ist.

2. Verfahren nach Anspruch 1, **dadurch gekennzeichnet, dass** die Farbmesswerte zusammen mit den jeweiligen Umgebungsparametern einer Messung in einer Messdatei auf einer mit dem Internet verbundenen Datenbank gespeichert werden.

3. Verfahren nach Anspruch 1 oder 2, **dadurch gekennzeichnet, dass** die Farbmesswerte Lichtintensitäts- oder Reflexionswerte bestimmter Wellenlängen zum Beispiel in einem Bereich zwischen 300 nm und 700 nm oder zum Beispiel der Wellenlängen von Primärfarben, Sekundärfarben oder Tertiärfarben sind.

4. Verfahren nach einem der Ansprüche 1 - 3, **dadurch gekennzeichnet, dass** die Farbmesswerte die Buntheitsdifferenz und/oder die Bunttonwinkeldifferenz sind.

5. Verfahren nach einem der Ansprüche 1 - 4, **dadurch gekennzeichnet, dass** die Umgebungsparameter die Temperatur eines Monitors, die Spannung eines Monitors, die Umgebungsbeleuchtung, eine Druckgeschwindigkeit, ein ph-Wert, ein elektrischer Leitwert, ein Alkoholgehalt, eine Farbviskosität, eine Farbwerkstemperatur, ein Emulsionszustand, eine Luftfeuchtigkeit oder eine Papierfeuchtigkeit sind.

6. Verfahren nach einem der Ansprüche 1 - 5, **dadurch gekennzeichnet, dass** das Verfahren bei der Wiedergabe von Farben auf einem Bildschirm, durch ein Druckerzeugnis oder bei einer Normlichtauswertung angewendet wird.

7. Verwenden des ermittelten Umgebungsparameters als Regelgröße zur Verbesserung der Farbwiedergabe.

8. Verfahren nach einem der Ansprüche 1 - 7, **dadurch gekennzeichnet, dass** der Schritt zur Ermittlung des Umgebungsparameters anhand einer Gewichtung für Farbmesswerte durchgeführt wird, deren Relevanz vor der Messung festgelegt wurde.

9. Verfahren nach einem der Ansprüche 1 - 8, **dadurch gekennzeichnet, dass** ein Umgebungsparameter der Feuchtigkeitsgrad der Farbe ist, wobei der Farbmesswert einer Messung mit hohem Feuchtigkeitsgrad mit dem entsprechenden Farbmesswert bei geringem Feuchtigkeitsgrad verglichen wird.

10. Verfahren nach Anspruch 9, **dadurch gekennzeichnet, dass** die Farbmesswerte bei geringem Feuchtigkeitsgrad in einer Datenbank gespeichert sind.

11. Verfahren nach Anspruch 9 oder 10, **dadurch gekennzeichnet, dass** die Farbmesswerte die Tonwertzunahmen sind.
